# EUROPEAN PATENT SPECIFICATION

(11) **EP 3 513 999 B1**
(45) Date of publication and mention of the grant of the patent: **15.06.2022**
(21) Application number: 18211386.0
(22) Date of filing: 10.12.2018
(51) Int. Cl.: B60K 35/00, G06F 3/01, H04N 13/344

(54) **VEHICLE DISPLAY NEXUS CONTROL APPARATUS**
FAHRZEUGANZEIGE-NEXUS-STEUERUNGSVORRICHTUNG
APPAREIL DE COMMANDE DE CONNEXIONS D'AFFICHAGE DE VÉHICULE

(30) Priority: 17.01.2018 JP 2018005816
(43) Date of publication of application: 24.07.2019
(73) Proprietor: TOYOTA JIDOSHA KABUSHIKI KAISHA, Toyota-shi, Aichi 471 8571 (JP)
(72) Inventor: AMANO, Mikihiro, Toyota-shi,, Aichi 471-8571 (JP); TAKEUCHI, Yusuke, Toyota-shi,, Aichi 471-8571 (JP); SHIN, Akinori, Toyota-shi,, Aichi 471-8571 (JP); OGAWA, Tomomi, Toyota-shi,, Aichi 471-8571 (JP); ONAGI, Tsutomu, Toyota-shi,, Aichi 471-8571 (JP)
(74) Representative: J A Kemp LLP

(56) References cited:
- DE-A1-102012 218 837
- GB-A- 2 532 462
- JP-B2- 6 026 011

## Description

### BACKGROUND

### Technical Field

The present disclosure relates to a vehicle display nexus control apparatus.

### Related Art

DE 10 2012 218837 A describes a method for displaying a representation on head-up display or head-mounted display e.g. LCD in passenger car, involves determining representation that is to-be-superimposed from view of user in environment, and assigning representation. The method involves determining the representation that is to-be-superimposed from the view of user in environment. The direction in which the representation is seemingly for the user, is determined. The determination is made whether the head-mounted display is superimposed on the display in the direction or not. The determination is made whether the head-up display is superimposed on the display in the direction or not. The representation is assigned either for displaying on the head-mounted display or the head-up display. GB 2532462 A describes a mixed reality information and/or entertainment system for use onboard a vehicle, the system comprising headset for placing over a user's eyes, the headset including a screen, image capture means for capturing images of the real world environment in the vicinity of a user, and a processor to generate a selected three-dimensional virtual reality environment and blend images of the real environment into the 3D virtual environment to create a mixed reality environment. The mixed environment is displayed on the screen. The system further comprises a control function for enabling selection of portions of the images of the real world environment and the processor is further configured to, in response to control signals from the control function, selectively remove the selected portions from, or blend the selected portions into, the mixed reality environment. The user may be able to select or manipulate elements of the virtual world using hand gestures.

Japanese Patent Application Laid-open No. 2016-095697 discloses a warning device that provides a cautionary alert (a "heads-up") related to a mobile obstacle to a driver when the driver's car travels across a crossroad. Further, as a human-machine interface (HMI) that provides a heads-up, providing the alert by pulsating a wearable terminal attached to the driver's body is described, in addition to a display or a speaker. In Japanese Patent Application Laid-open No. 2016-095697, the matter of displaying information at a wearable terminal is not considered, and there is room for improvement in terms of effectively displaying information.

### SUMMARY

The present disclosure considers the foregoing circumstances and aims to appropriately and effectively display information at a vehicle display nexus control apparatus provided with a wearable terminal.

A vehicle display nexus control apparatus according to a first aspect is defined in appended claim 1.

The vehicle display nexus control apparatus according to the first aspect is provided with a first display part provided at a vehicle main body and a second display part provided at a wearable terminal, and the second display part is disposed in front of the eyes of an occupant in a state in which the wearable terminal is being worn. As a result, information can be displayed in front of the occupant's eyes irrespective of the orientation of the occupant's face.

Further, information is acquired by a display information acquisition unit, and a display location selection unit determines where to display this information. Specifically, the display location selection unit determines whether to display the information acquired by the display information acquisition unit at both the first display part and the second display part, or at only the first display part, or at only the second display part. As a result, information can be appropriately and effectively displayed, by displaying information prioritized for viewing by an occupant at the second display part in front of the eyes, and by displaying low priority information at the first display part.

The vehicle display nexus control apparatus according to a second aspect is configured such that the apparatus according to the first aspect is provided with plural wearable terminals.

In the vehicle display nexus control apparatus according to the second aspect, even in a case in which there are plural occupants, information displayed at the second display part can be viewed by having each occupant wear a wearable terminal.

The vehicle display nexus control apparatus according to a third aspect is configured such that the apparatus according to the second aspect further includes a display priority setting unit that sets a priority level, for information to be displayed, with respect to the second display part of each of the plural wearable terminals.

In the vehicle display nexus control apparatus according to the third aspect, the information that an occupant wearing a wearable terminal wishes to see can be prioritized for display.

The vehicle display nexus control apparatus according to a fourth aspect is configured such that the display location selection unit in the apparatus according to the second aspect or third aspect designates hidden information, which is not to be displayed, with respect to the second display part of each of the plural wearable terminals.

In the vehicle display nexus control apparatus according to the fourth aspect, by setting personal information such as electronic mail and telephone call history as hidden information with respect to the wearable terminals of other occupants, personal information is not viewed by other people.

The vehicle display nexus control apparatus according to a fifth aspect is configured such that in the apparatus according to any one of the second to fourth aspects, in a case in which the information acquired by the display information acquisition unit is information related to an obstacle in the vehicle periphery, the information is displayed at the second display part of all the wearable terminals.

In the vehicle display nexus control apparatus according to the fifth aspect, all occupants wearing wearable terminals can view information related to an obstacle.

The vehicle display nexus control apparatus according to a sixth aspect is configured such that in the second display part of the apparatus according to the fifth aspect, information is displayed in a direction toward which the obstacle is present.

In the vehicle display nexus control apparatus according to the sixth aspect, owing to the display of the information in the direction toward which the obstacle is present, an occupant can intuitively grasp the direction of an obstacle.

As explained above, according to the vehicle display nexus control apparatus of the first aspect, information can be appropriately and effectively displayed in a vehicle display nexus control apparatus provided with a wearable terminal.

According to the vehicle display nexus control apparatus of the second aspect, information can be appropriately and effectively displayed even in a case in which there are plural occupants.

According to the vehicle display nexus control apparatus of the third aspect, convenience is improved as compared to a case in which the same information is displayed at the second display part of plural wearable terminals.

According to the vehicle display nexus control apparatus of the fourth aspect, privacy can be protected even in a case in which personal information is displayed.

According to the vehicle display nexus control apparatus of the fifth aspect, information regarding an obstacle will not be overlooked by any of the occupants wearing a wearable terminal.

According to the vehicle display nexus control apparatus of the sixth aspect, an occupant can swiftly grasp the direction of an obstacle.

### BRIEF DESCRIPTION OF THE DRAWINGS

Exemplary embodiments of the present disclosure will be described in detail based on the following figures, wherein:
Fig. 1 is a schematic view schematically illustrating the cabin interior of a vehicle equipped with a vehicle display nexus control apparatus according to a first exemplary embodiment;
Fig. 2 is a diagram showing the periphery of an instrument panel of a vehicle equipped with the vehicle display nexus control apparatus according to the first exemplary embodiment;
Fig. 3 is a diagram showing a wearable terminal that is a component of the vehicle display nexus control apparatus according to the first exemplary embodiment;
Fig. 4A is an enlarged view showing an enlarged state in which an obstacle is displayed at a second display part of a wearable terminal;
Fig. 4B is a diagram showing a state in which the text of an electronic mail is displayed at a second display part of a wearable terminal;
Fig. 5 is a block diagram of the vehicle display nexus control apparatus according to the first exemplary embodiment;
Fig. 6 is an example of a flowchart of the vehicle display nexus control apparatus according to the first exemplary embodiment;
Fig. 7 is a schematic view schematically illustrating the cabin interior of a vehicle equipped with a vehicle display nexus control apparatus according to a second exemplary embodiment; and
Fig. 8 is a block diagram of the vehicle display nexus control apparatus according to the second exemplary embodiment.

### DETAILED DESCRIPTION

### First Exemplary Embodiment

In the following, vehicle display nexus control apparatus 10 according to a first exemplary embodiment is explained with reference to the drawings. It should be noted that the arrow FR shown as appropriate in the respective drawings indicates a vehicle front side, the arrow UP indicates a vehicle upper side, and the arrow LH indicates a vehicle left-hand side. Further, in the following explanation, unless otherwise specified, when front-rear, up-down, and left-right directions are used, these indicate the front and rear in a vehicle front-rear direction, upward and downward in a vehicle vertical direction, and left and right in a case facing a direction of travel.

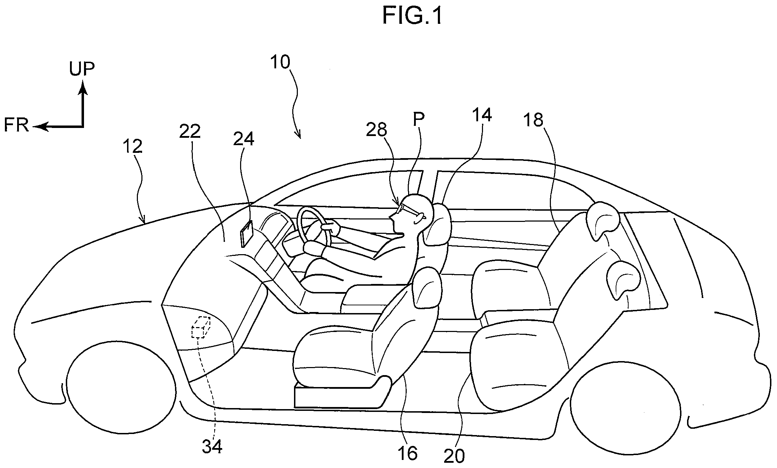

As shown in Fig. 1, in the cabin interior of vehicle 12 provided with vehicle display nexus control apparatus 10 according to the present exemplary embodiment, front seat 14, front seat 16, rear seat 18 and rear seat 20 are provided. Front seat 14 is positioned at the right-hand side of the vehicle and, in the present exemplary embodiment, is the driver's seat in which occupant P is seated. Further, front seat 16 is positioned at the left-hand side of the vehicle and, in the present exemplary embodiment, is the front passenger seat. It should be noted that in a left-hand drive configuration of vehicle 12, front seat 16 would be the driver's seat.

Rear seat 18 is positioned behind front seat 14 and rear seat 20 is positioned behind front seat 16. In this way, in one example of vehicle 12 of the present exemplary embodiment, four seats are provided. In the present exemplary embodiment, occupant P is seated only in front seat 14. Further, instrument panel 22 is provided at a vehicle front side of front seat 14 and front seat 16.

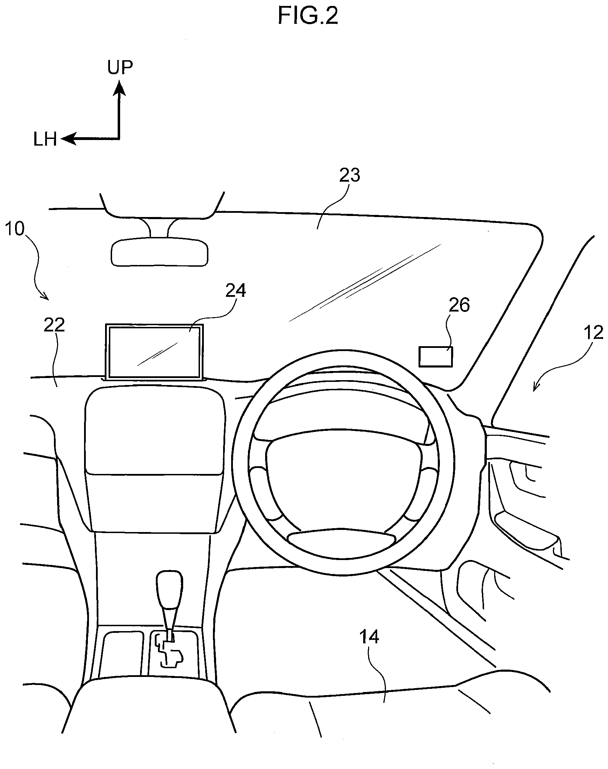

As shown in Fig. 2, instrument panel 22 extends along a vehicle width direction, and center panel display 24 is provided as a first display part at a position in this instrument panel 22 that is between front seat 14 and front seat 16. Further, a front end part of instrument panel 22 is connected to front windshield glass 23. Further, head-up display (HUD) 26 is provided as a first display part at an end part at the vehicle right-hand side of front windshield glass 23. HUD 26 is a display part that is displayed by a head-up display unit (not shown in the drawings) provided inside instrument panel 22. As per the foregoing, in the present exemplary embodiment, center panel display 24 and HUD 26 are configured as a first display part that is provided at a vehicle main body side.

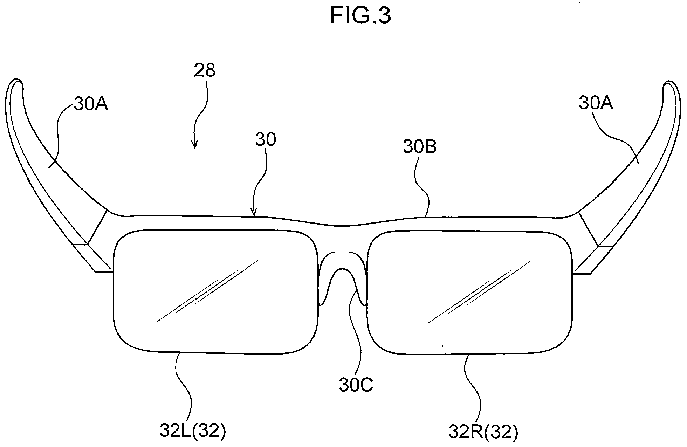

Here, as shown in Fig. 1, occupant (driver) P seated in front seat 14 is wearing wearable terminal 28. As shown in Fig. 3, wearable terminal 28 is formed in the shape of a pair of spectacles worn on the head of occupant P, and is configured by mounting part 30 and monitor part 32 (monitor part 32L, monitor part 32R), monitor part 32 being provided as a second display part. Mounting part 30 is configured by a left-right pair of ear rests 30A, and a connection part 30B that connects the ear rests 30A. Each one of the left-right pair of ear rests 30A is an elongate portion that extends along the side of the head of occupant P and is configured to rest on an ear of occupant P.

Connection part 30B is joined to each of the pair of ear rests 30A in a substantially straight line, and nose bridge part 30C is formed at a central part in a length direction of this connection part 30B. Nose bridge part 30C is formed with a recessed shape so as to correspond to the shape of the nose of occupant P. Further, nose bridge part 30C is configured so as to be supported at the nose in a worn state of this wearable terminal 28. Further, monitor part 32L and monitor part 32R are attached with one disposed at either side of this nose bridge part 30C.

Monitor part 32L and monitor part 32R are formed from a transparent material, and are provided at portions that are disposed in front of the eyes of occupant P in a state in which wearable terminal 28 is worn. Further, monitor part 32L is positioned in front of the left eye of occupant P in a state in which wearable terminal 28 is worn, and monitor part 32R is positioned in front of the right eye of occupant P in a state in which wearable terminal 28 is worn. It should be noted that "transparent" as referred to herein denotes a concept that broadly includes configurations whereby occupant P is able to visually observe the outside of vehicle 12 through monitor parts 32L and 32R, and includes semi-transparency.

Further, a transceiver part, which is not shown in the drawings, is provided at wearable terminal 28. This transceiver part is configured so as to be able to communicate with electronic control unit (ECU) 34, which functions as a control unit and is described below, and data from the side of wearable terminal 28 can be sent from this transceiver part to ECU 34. Further, conversely, data from ECU 34 can be received by the transceiver part.

Identification means, which identify the occupant wearing wearable terminal 28, are provided at the cabin interior of vehicle 12 or at wearable terminal 28. A variety of methods can be adopted as the identification means and, for example, a sensor that detects the eye of the wearer may be provided at wearable terminal 28 so as to identify the wearer by comparing the iris detected by this sensor with information on a preregistered iris. Further, a camera that images the vehicle cabin interior may be provided so as to identify the wearer by comparing the face of the occupant imaged by this camera with information on a preregistered face. As other identification means, verification of the wearer may be performed at wearable terminal 28 according to a predetermined method, after the wearer has donned wearable terminal 28. For example, verification may be performed by voiceprint from a vocalization made by the occupant who has donned wearable terminal 28. Alternatively, verification may be performed by direct or indirect input of a preset password to wearable terminal 28 by the occupant who has donned wearable terminal 28.

Here, as shown in Fig. 1, ECU 34 is installed in the interior of instrument panel 22, and ECU 34 is electrically connected to center panel display 24 and HUD 2 (refer to Fig. 2).

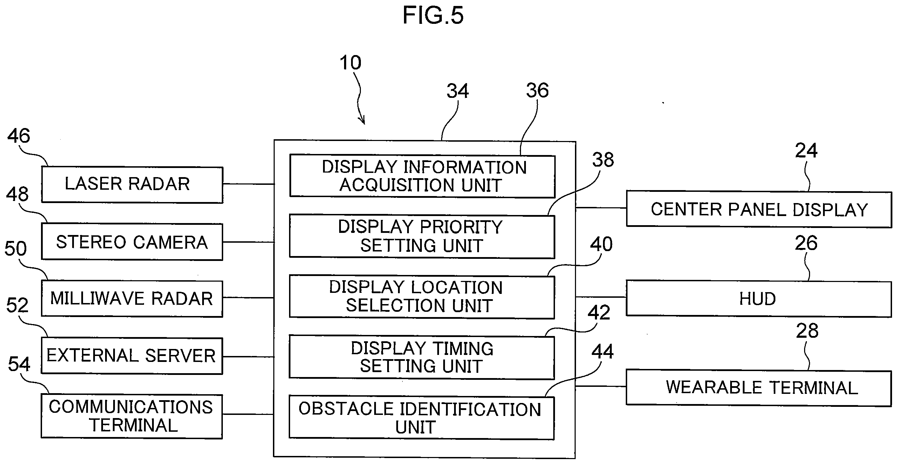

As shown in Fig. 5, ECU 34 is principally configured by display information acquisition unit 36, display priority setting unit 38, display location selection unit 40, display timing setting unit 42 and obstacle identification unit 44. Further, ECU 34 is electrically connected to sensors such as laser radar 46, stereo camera 48 and milliwave radar 50, and is configured to acquire signals from these sensors. Laser radar 46 is provided, for example, at a front part or an upper part of vehicle 12, and detects distances from the surroundings by measuring the time until reflected light returns from laser light irradiated to the surroundings. Milliwave radar 50 is provided, for example, at plural locations at the outer periphery of vehicle 12, and emits radio waves in the millimeter waveband, and detects the distance from, and velocity of, an object by measuring the return time and frequency of reflected waves. Stereo camera 48 is provided, for example, at an upper part of vehicle 12, and performs spatial recognition of the vehicle surroundings by acquiring image data using two cameras.

In addition, ECU 34 is configured so as to be able to communicate with external server 52 and communications terminal 54. Information related to electronic mail and social networking services (SNS), for example, is recorded at external server 52, which performs exchange of information with ECU 34 in accordance with predetermined communication means. Further, communications terminal 54 includes, for example, a portable telephone or smartphone held by occupant P, and performs exchange of information with ECU 34 in accordance with predetermined communication means.

Display information acquisition unit 36 acquires information that is to be displayed at at least one of center panel display 24, HUD 26 or wearable terminal 28. Specifically, information is acquired that is related, for example, to the position of, or distance from, surrounding obstacles detected by laser radar 46, stereo camera 48 and milliwave radar 50. Further, display information acquisition unit 36 acquires information such as electronic mail, SNS and telephone call history from external server 52 and communications terminal 54.

The display location for the information that is acquired at display information acquisition unit 36 is selected by display location selection unit 40. Display location selection unit 40 selects at which of center panel display 24, HUD 26 and wearable terminal 28 to effect display, based on the type and content of the acquired information. Here, in the present exemplary embodiment, as shown in Fig. 1, occupant P seated in front seat 14, which is the driver's seat, is wearing wearable terminal 28. Therefore, among the information acquired by display information acquisition unit 36, information related to obstacles in the surroundings of vehicle 12 is displayed at wearable terminal 28. That is, information on obstacles, which is information required by occupant P, who is the driver, in order to drive, is displayed at wearable terminal 28, which is the closest distance from occupant P, thereby effectively providing a heads-up.

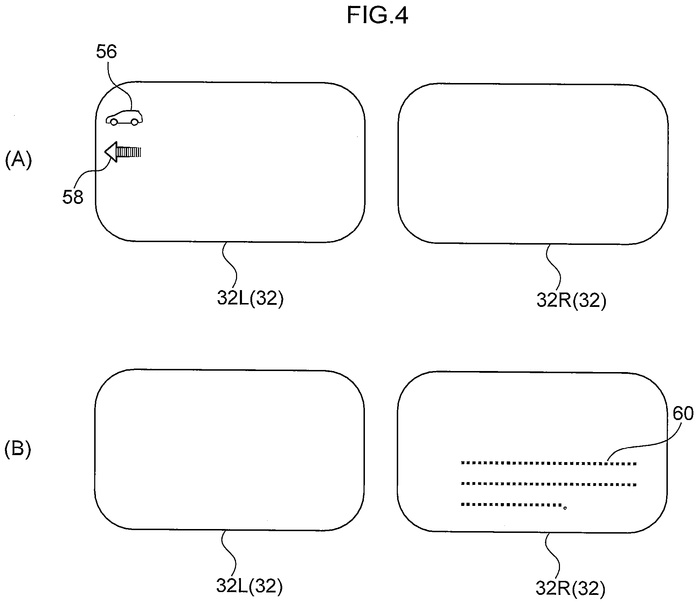

As shown in Fig. 4A, in a case in which an obstacle is in close proximity at the vehicle left-hand side when occupant P's head is facing the vehicle front, symbol 56 representing an obstacle, and symbol 58 representing an arrow pointing in a left-hand direction, are displayed at monitor part 32L. As a result of this display, a heads-up is provided to occupant P of the fact that an obstacle is in close proximity at the left-hand side of occupant P. Further, occupant P is prompted to face the left and make visual contact with the obstacle. It should be noted that in the present exemplary embodiment, the direction that wearable terminal 28 is facing is detected, and the direction in which the obstacle is present relative to wearable terminal 28 is indicated. Therefore, the configuration is such that even in a case in which the position of an obstacle relative to vehicle 12 does not change, if occupant P faces a different direction, the display position of symbol 56 and symbol 58 will change. It should also be noted that in vehicle 12 provided with HUD 26 as in the present exemplary embodiment, obstacle information may be displayed at both of wearable terminal 28 and HUD 26. In such a case, since the direction in which the obstacle is present displayed at HUD 26 is the direction relative to vehicle 12, a constant direction is indicated irrespective of the direction faced by occupant P. Further, in addition to symbol 56 and symbol 58, the distance from the vehicle to the obstacle may be displayed.

As shown in Fig. 5, from among the information acquired at display information acquisition unit 36, display location selection unit 40 effects display of personal information such as electronic mail, SNS and telephone call history, at wearable terminal 28. That is, private information that is not for disclosure to other people is not displayed at center panel display 24 or HUD 26, and is displayed at wearable terminal 28, thereby protecting privacy.

As shown in Fig. 4B as one example, when an electronic mail is received, the text is displayed by ECU 34 at monitor part 32R of wearable terminal 28. It should be noted that the display position and the display method are not limited, and the text may be displayed at monitor part 32L. Further, display may be performed while moving characters across monitor part 32L or monitor part 32R.

As shown in Fig. 5, display priority setting unit 38 sets the priority level for displaying information acquired at display information acquisition unit 36. For example, the setting of the priority level is performed such that in a case in which information related to an obstacle in the vehicle surroundings and information related to an electronic mail have been acquired, display of the information related to the obstacle is prioritized.

Display timing setting unit 42 sets the timing at which information acquired at display information acquisition unit 36 is displayed. For example, information that might become a hindrance to driving, such as information related to electronic mail or SNS, is not displayed during driving but is displayed when vehicle 12 is stationary. At this time, traffic light information may be acquired in advance and the information displayed at the timing of a signal prohibiting progress across a junction, such as a red light signal. Further, the information may be displayed at a timing at which the vehicle velocity is zero (0) based on information from a velocity sensor. In addition, in a case in which an autonomous cruising function is installed, the information may be displayed at a timing at which a state has been detected in which the autonomous cruising function has been activated and occupant P has removed his/her hands from the steering wheel.

Obstacle identification unit 44 determines the type of obstacle based on information obtained by display information acquisition unit 36 from stereo camera 48 or the like. For example, obstacle identification unit 44 determines whether the obstacle is a vehicle, a pedestrian, or another kind of obstacle such as a pole. Further, a symbol representing the obstacle identified by obstacle identification unit 44 is displayed at wearable terminal 28.

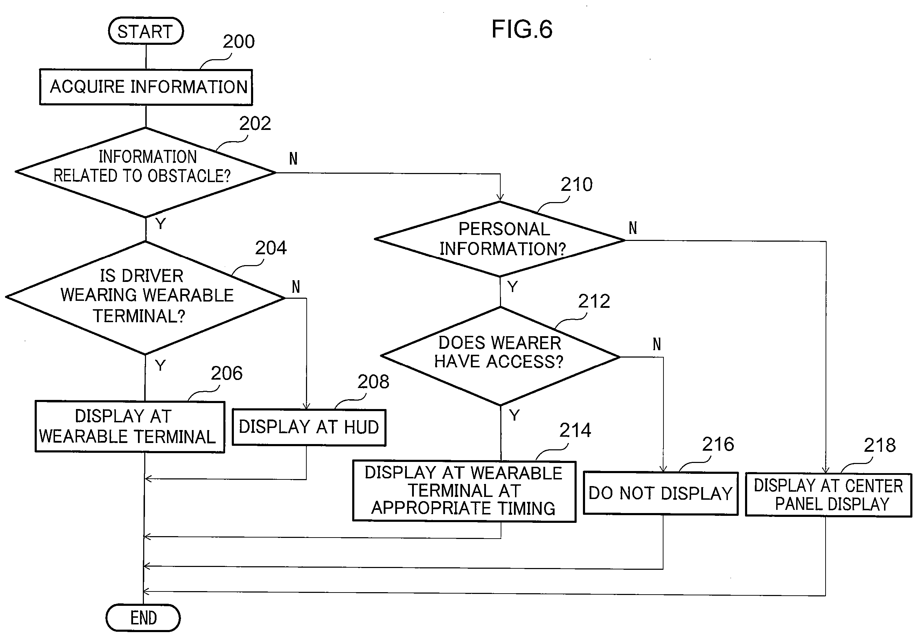

Here, an example of the flow when ECU 34 displays information is explained with reference to the flowchart of Fig. 6.

In step 200 of Fig. 6, information is acquired. Here, as shown in Fig. 5, information is acquired by display information acquisition unit 36 from laser radar 46, stereo camera 48, milliwave radar 50, external server 52, communications terminal 54, and the like.

In step 202, a determination is made as to whether or not the information acquired by display information acquisition unit 36 is information related to an obstacle in the surroundings of vehicle 12. Further, in a case in which the information relates to an obstacle, the flow proceeds to step 204, and in a case in which the information does not relate to an obstacle, the flow proceeds to step 210.

In step 204, a determination is made as to whether or not the wearer wearing wearable terminal 28 is the driver. This determination is made based on a signal from identification means that identify an occupant wearing wearable terminal 28 as discussed above. Further, in a case in which it is the driver that is wearing wearable terminal 28, the flow proceeds to step 206, and in a case in which it is not the driver that is wearing wearable terminal 28, the flow proceeds to step 208.

In step 206, obstacle information acquired by display information acquisition unit 36 is displayed at wearable terminal 28 worn by the driver. However, in step 208, obstacle information acquired by display information acquisition unit 36 is displayed at HUD 26 (refer to Fig. 2). As a result, in a case in which the driver is wearing the wearable terminal 28, the obstacle information is displayed in the driver's line of sight, thereby effectively providing a heads-up, and even in a case in which the driver is not wearing the wearable terminal 28, since the obstacle information is displayed at a display device such as the HUD 26, it is possible to minimize cases of oversight of the obstacle information by the driver.

Next, in a case in which it is determined in step 202 that the information acquired by display information acquisition unit 36 is not information related to an obstacle, a determination is made in step 210 as to whether or not the information is personal information. Further, in a case in which the information is personal information such as electronic mail or SNS, the flow proceeds to step 212, and in a case in which the information is not personal information, the flow proceeds to step 218.

In step 212, a determination is made as to whether or not a wearer wearing wearable terminal 28 has access to the personal information identified in step 210. For example, in the case of electronic mail or SNS, a determination is made that the wearer has access in a case in which a message is addressed to the occupant wearing wearable terminal 28. Further, in a case in which a wearer wearing wearable terminal 28 has access, the flow proceeds to step 214, and in a case in which a wearer wearing wearable terminal 28 does not have access, the flow proceeds to step 216.

In step 214, the information is displayed at wearable terminal 28 at an appropriate timing. The timing for displaying the information is set by display timing setting unit 42 (refer to Fig. 5). For example, in a case in which the wearer of wearable terminal 28 is the driver, the display timing is set based on information from traffic lights and/or information from velocity sensors. However, in step 216, since the wearer of wearable terminal 28 does not have access, the information is not displayed at wearable terminal 28. Further, since the information is personal information, it is not displayed at center panel display 24 or HUD 26. It should be noted that even in such a case, the information can be viewed at a communications terminal such as a smartphone held by an individual.

In step 218, since the information acquired by display information acquisition unit 36 is neither related to an obstacle nor personal, the information is displayed at center panel display 24. Examples of this kind of information include weather information and news.

### Mechanism and Effects

Next, the mechanism and effects of the present exemplary embodiment are explained.

In vehicle display nexus control apparatus 10 according to the present exemplary embodiment, since information can be displayed at monitor parts 32L, 32R of wearable terminal 28, being a second display part, information can be displayed in front of the eyes of occupant P irrespective of the orientation of occupant P's face. In particular, regarding information related to an obstacle in the surroundings of vehicle 12 and the like, the occupant P can see the obstacle information even in a case in which occupant P's sight line is not directed at HUD 26, and display is achieved without the obstacle information being overlooked. Further, by displaying information in the direction of the obstacle, occupant P is able to intuitively grasp the direction of the obstacle.

Further, in the present exemplary embodiment, owing to selection by display location selection unit 40 of the display location for the information acquired by display information acquisition unit 36, information can be appropriately and effectively displayed by displaying information prioritized by occupant P at wearable terminal 28 and by displaying information having a lower degree of priority at center panel display 24 or HUD 26.

In addition, in the present exemplary embodiment, by displaying personal information such as electronic mails and telephone call history only at wearable terminal 28, display is achieved without personal information being viewed by other parties. That is, privacy can be protected.

### Second Exemplary Embodiment

Next, vehicle display nexus control apparatus 60 according to a second exemplary embodiment is explained. The present exemplary embodiment differs from the first exemplary embodiment in that plural wearable terminals are provided. It should be noted that the same reference numerals are assigned to parts of the configuration that are similar to the first exemplary embodiment, and explanation thereof is omitted as appropriate.

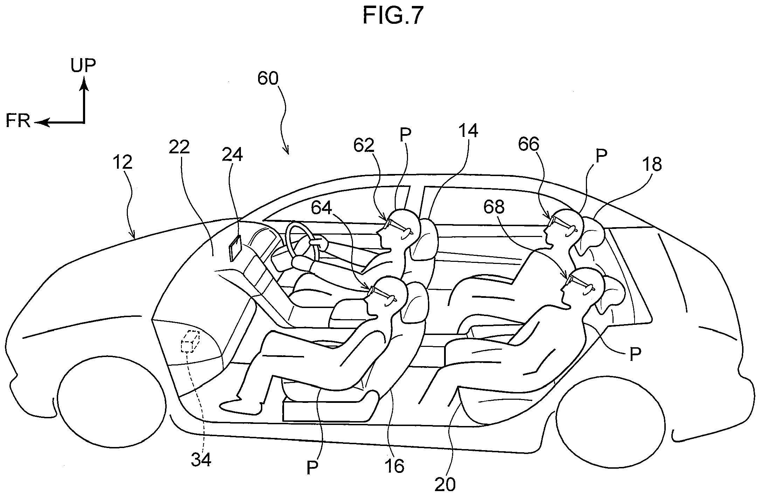

As shown in Fig. 7, plural (four) wearable terminals (wearable terminal 62, wearable terminal 64, wearable terminal 66 and wearable terminal 68) are provided in the cabin interior of vehicle 12 provided with vehicle display nexus control apparatus 60 of the present exemplary embodiment, and the wearable terminals are respectively worn by occupants P.

Wearable terminal 62 is worn by occupant P seated in front seat 14, which is the driver's seat, and wearable terminal 64 is worn by occupant P seated in front seat 16, which is the front passenger seat. Further, wearable terminal 66 is worn by occupant P seated in right-hand side rear seat 18, and wearable terminal 68 is worn by occupant P seated in left-hand side rear seat 20.

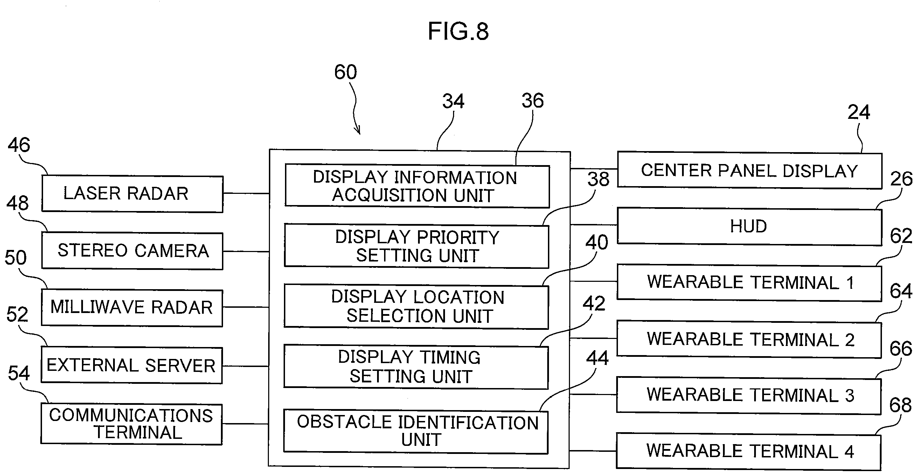

As shown in Fig. 8, wearable terminal 62, wearable terminal 64, wearable terminal 66 and wearable terminal 68 are each configured to perform exchange of information with ECU 34 using predetermined communications means. Further, display location selection unit 40 selects at which of center panel display 24, HUD 26, wearable terminal 62, wearable terminal 64, wearable terminal 66 and wearable terminal 68 to display information acquired at display information acquisition unit 36 based on the type and content of the information.

Further, display location selection unit 40 of the present exemplary embodiment sets hidden information, which is not to be displayed, with respect to each of wearable terminal 62, wearable terminal 64, wearable terminal 66 and wearable terminal 68. For example, information related to the state of vehicle 12 such as the amount of fuel remaining may be set as hidden information with respect to terminals other than wearable terminal 62 worn by the driver (i.e., with respect to wearable terminal 64, wearable terminal 66 and wearable terminal 68). In such a case, information related to the amount of fuel remaining is displayed only at wearable terminal 62.

Display priority setting unit 38 in the present exemplary embodiment is configured to change the priority level of information to be displayed, with respect to each of wearable terminal 62, wearable terminal 64, wearable terminal 66 and wearable terminal 68. For example, a high priority level is set for information related to the state of vehicle 12, such as the amount of fuel remaining, with respect to wearable terminal 62 worn by the driver, while a low priority level is set for this information with respect to wearable terminal 64, wearable terminal 66 and wearable terminal 68 worn by the other occupants. Further, by setting, in advance, information such as news or weather or location information that is of high interest to each occupant P, a high priority level may be set for information of high interest.

In addition, the present exemplary embodiment is configured such that information displayed at wearable terminal 62, wearable terminal 64, wearable terminal 66 and wearable terminal 68 can be displayed at center panel display 24. For example, when occupant P seated in front seat 16 and wearing wearable terminal 64 wishes to show information displayed at wearable terminal 64 to other occupants P, this information can be displayed at center panel display 24 by operation of an operation button (not shown) provided at wearable terminal 64.

In addition, in the present exemplary embodiment, center panel display 24 can be made to function as a monitor frame. Specifically, even in a state in which information is not displayed at center panel display 24, each of wearable terminal 62, wearable terminal 64, wearable terminal 66 and wearable terminal 68 is configured so as to display information at monitor part 32L and monitor part 32R such that information appears to be displayed at center panel display 24 when occupant P looks at center panel display 24 via monitor part 32L and monitor part 32R. As a result, in Fig. 7, for example, even in a case in which occupant P seated in front seat 16 and occupant P seated in rear seat 18 are both directing their lines of sight toward center panel display 24, the image that appears to be displayed at center panel display 24 via monitor part 32L and monitor part 32R of wearable terminal 64, and the image that appears to be displayed at center panel display 24 via monitor part 32L and monitor part 32R of wearable terminal 66, are different images.

### Mechanism and Effects

Next, the mechanism and effects of the present exemplary embodiment are explained.

In vehicle display nexus control apparatus 60 according to the present exemplary embodiment, since wearable terminal 62, wearable terminal 64, wearable terminal 66 and wearable terminal 68 are provided, information can be appropriately and effectively displayed even in a case in which there are plural occupants.

Further, as in the present exemplary embodiment, it is possible for the level of priority of information to be displayed to be set by display priority setting unit 38 for each of wearable terminal 62, wearable terminal 64, wearable terminal 66 and wearable terminal 68. As a result, it is possible to prioritize and display the information that occupants P wearing wearable terminal 62, wearable terminal 64, wearable terminal 66 and wearable terminal 68 wish to see. That is, compared to a case in which the same information is displayed at wearable terminal 62, wearable terminal 64, wearable terminal 66 and wearable terminal 68, convenience can be improved.

In addition, in the present exemplary embodiment, hidden information that is not displayed can be set for each of wearable terminal 62, wearable terminal 64, wearable terminal 66 and wearable terminal 68. As a result, personal information such as electronic mails and telephone call history is not seen by other occupants P. That is, privacy can be protected.

In addition, information displayed at each of wearable terminal 62, wearable terminal 64, wearable terminal 66 and wearable terminal 68 can be displayed at center panel display 24. As a result, information sharing with other occupants P can be smoothly performed.

Further, in the present exemplary embodiment, since center panel display 24 can be made to function as a monitor frame, a wearer's field of view can be widened as compared to a case in which the information is displayed at monitor parts 32L, 32R adjacent the wearer's eyes.

In the foregoing, vehicle display nexus control apparatus according to a first exemplary embodiment and a second exemplary embodiment have been explained; however, a variety of aspects may of course be practiced within the scope of the appended claims. For example, in the above-described embodiments, the vehicle display nexus control apparatus has been applied to a four-person vehicle 12 provided with four seats; however, the disclosure is not limited to this, and the vehicle display nexus control apparatus may be applied to vehicles provided with even more seats. In such a case, if a configuration is adopted in which the same number of wearable terminals is provided as there are seats, convenience can be secured for all occupants.

Further, in the above-described embodiments, center panel display 24 provided at instrument panel 22 has been designated as the first display part; however, the disclosure is not limited to this, and a separate monitor may be provided at another location and designated as the first display part. For example, a monitor may be provided at a rear face of front seat 14 or a rear face of front seat 16, and designated as the first display part exclusively for the occupants P seated in rear seats 18, 20. Further, a monitor may be provided as the first display part at the entirety of instrument panel 22, or a monitor may be provided as the first display part at a ceiling portion of the vehicle cabin interior.

In addition, in the above-described embodiments, as shown in Fig. 3, the wearable terminal is configured as a terminal in the shape of a pair of spectacles; however, the disclosure is not limited to this. For example, the terminal may be configured in the shape of a pair of goggles or configured in another shape.

## Claims

1. A vehicle display nexus control apparatus (10, 60) for a vehicle (12), comprising:
a first display part (24, 26) to be provided at a vehicle main body of the vehicle (12);
a wearable terminal (28, 62, 64, 66, 68) that is configured to be worn at a head region of an occupant (P) including a driver of the vehicle (12), and that is provided with a second display part (32L, 32R) to be disposed in front of an eye of the occupant (P) in a worn state;
a display information acquisition unit (36) that is configured to acquire information to be displayed at at least one of the first display part (24, 26) or the second display part (32L, 32R); **characterised by**
an obstacle identification unit (44) configured to determine whether or not the information acquired by display information acquisition unit (36) is information related to an obstacle in the surroundings of vehicle (12);
a display location selection unit (40) that is configured to determine whether to display information related to an obstacle as acquired by the display information acquisition unit (36) at both the first display part (24, 26) and the second display part (32L, 32R), or at only the first display part (24, 26), or at only the second display part (32L, 32R) based on whether the driver is wearing the wearable terminal (28, 62, 64, 66, 68).

2. The vehicle display nexus control apparatus of claim 1, wherein the display location selection unit (40) is configured to, in response to a determination that the driver is wearing the wearable terminal (22, 62, 64, 66, 68), display the information related to an obstacle at the second display part (32L, 32R) of the wearable terminal (28, 62, 64, 66, 68) worn by the driver.

3. The vehicle display nexus control apparatus of claim 1 or 2, wherein the information acquired by the display information acquisition unit (36) includes personal information that is not for disclosure to other people, and the display location selection unit (40) is configured, for personal information, to determine whether or not an occupant wearing the wearable terminal (28, 62, 64, 66, 68) has access to the personal information and, in a case in which the occupant wearing the wearable terminal (28, 62, 64, 66, 68) has access to the personal personal information, to display the personal information at only the second display part (32L, 32R) of the wearable terminal (28, 62, 64, 66, 68) worn by the personal occupant at an appropriate timing.

4. The vehicle display nexus control apparatus of claim 3, wherein the display location selection unit (40) is configured to, for information that is neither information related to an obstacle nor private information, display that information at the first display part (24, 26).

5. The vehicle display nexus control apparatus of any one of claims 1 to 4, wherein a plurality of the wearable terminals (22, 62, 64, 66, 68) is provided to be worn by different respective occupants of the vehicle (12).

6. The vehicle display nexus control apparatus of claim 5, further comprising a display priority setting unit (38) that is configured to set respective priority levels, for information to be displayed, with respect to the second display part (32L, 32R) of each of the respective plurality of wearable terminals (28, 62, 64, 66, 68).

7. The vehicle display nexus control apparatus of claim 5 or claim 6, wherein the display location selection unit (40) is configured to designate, for the respective second display part (32L, 32R) of each of the respective plurality of wearable terminals (28, 62, 64, 66, 68), information as hidden information for the respective second display part (32L, 32R), the respective hidden information not being displayed at the respective second display part (32L, 32R).

8. The vehicle display nexus control apparatus of any one of claims 5 to 7, wherein, in a case in which the information acquired by the display information acquisition unit (36) is information related to an obstacle in the vehicle periphery, the information is displayed at the second display part (32L, 32R) of all the wearable terminals (28, 62, 64, 66, 68).

9. The vehicle display nexus control apparatus of claim 8, wherein, at the second display part (32L, 32R), information is displayed in a direction toward which the obstacle is present.

## Patentansprüche

1. Fahrzeuganzeige-Nexus-Steuervorrichtung (10, 60) für ein Fahrzeug (12), die Folgendes umfasst:
ein erstes Anzeigeteil (24, 26), das an einem Fahrzeughauptkörper des Fahrzeugs (12) vorzusehen ist;
eine tragbare Endvorrichtung (28, 62, 64, 66, 68), die dafür konfiguriert ist, an einem Kopfbereich eines Insassen (P) einschließlich eines Fahrers des Fahrzeugs (12) getragen zu werden, und die mit einem zweiten Anzeigeteil (32L, 32R) versehen ist, das in einem getragenen Zustand vor einem Auge des Insassen (P) angeordnet wird;
eine Anzeigeinformationserfassungseinheit (36), die dafür konfiguriert ist, Informationen zu erfassen, die an mindestens einem von dem ersten Anzeigeteil (24, 26) oder dem zweiten Anzeigeteil (32L, 32R) anzuzeigen sind; **gekennzeichnet durch**
eine Hinderniserfassungseinheit (44), die dafür konfiguriert ist, zu bestimmen, ob die von der Anzeigeinformationserfassungseinheit (36) erfassten Informationen Informationen sind, die sich auf ein Hindernis in der Umgebung des Fahrzeugs (12) beziehen oder nicht;
eine Anzeigeortauswahleinheit (40), die dafür konfiguriert ist, zu bestimmen, ob Informationen angezeigt werden sollen, die sich auf ein Hindernis beziehen, wie es von der Anzeigeinformationserfassungseinheit (36) erfasst wird, sowohl auf dem ersten Anzeigeteil (24, 26) als auch auf dem zweiten Anzeigeteil (32L, 32R), oder nur auf dem ersten Anzeigeteil (24, 26) oder nur auf dem zweiten Anzeigeteil (32L, 32R), je nachdem, ob der Fahrer die tragbare Endvorrichtung (28, 62, 64, 66, 68) trägt.

2. Fahrzeuganzeige-Nexus-Steuervorrichtung nach Anspruch 1, wobei die Anzeigeortauswahleinheit (40) dafür konfiguriert ist, die auf ein Hindernis bezogenen Informationen auf dem zweiten Anzeigeteil (32L, 32R) der vom Fahrer getragenen tragbaren Endvorrichtung (28, 62, 64, 66, 68) anzuzeigen, als Reaktion auf eine Bestimmung, dass der Fahrer die tragbare Endvorrichtung (22, 62, 64, 66, 68) trägt.

3. Fahrzeuganzeige-Nexus-Steuervorrichtung nach Anspruch 1 oder 2, wobei die von der Anzeigeinformationserfassungseinheit (36) erfassten Informationen persönliche Informationen enthalten, die nicht zur Offenlegung gegenüber anderen Personen bestimmt sind, und die Anzeigeortauswahleinheit (40) dafür konfiguriert ist, für persönliche Informationen zu bestimmen, ob ein Insasse, der die tragbare Endvorrichtung (28, 62, 64, 66, 68) trägt, Zugriff auf die persönlichen Informationen hat oder nicht, und, in einem Fall, in dem der Insasse, der die tragbare Endvorrichtung (28, 62, 64, 66, 68) trägt, Zugang zu den persönlichen Informationen hat, die persönlichen Informationen nur auf dem zweiten Anzeigeteil (32L, 32R) der tragbaren Endvorrichtung (28, 62, 64, 66, 68), die von dem Insassen getragen wird, zu einem geeigneten Zeitpunkt anzuzeigen.

4. Fahrzeuganzeige-Nexus-Steuervorrichtung nach Anspruch 3, wobei die Anzeigeortauswahleinheit (40) für Informationen, die weder mit einem Hindernis zusammenhängende Informationen noch private Informationen sind, dafür konfiguriert ist, diese Informationen auf dem ersten Anzeigeteil (24, 26) anzuzeigen.

5. Fahrzeuganzeige-Nexus-Steuervorrichtung nach einem der Ansprüche 1 bis 4, wobei eine Vielzahl der tragbaren Endvorrichtungen (22, 62, 64, 66, 68) vorgesehen ist, um von verschiedenen jeweiligen Insassen des Fahrzeugs (12) getragen zu werden.

6. Fahrzeuganzeige-Nexus-Steuervorrichtung nach Anspruch 5, die ferner eine Anzeigeprioritätseinstelleinheit (38) umfasst, die dafür konfiguriert ist, jeweilige Prioritätsebenen für anzuzeigende Informationen in Bezug auf den zweiten Anzeigeteil (32L, 32R) jeder der jeweiligen Vielzahl von tragbaren Endvorrichtungen (28, 62, 64, 66, 68) einzustellen.

7. Fahrzeuganzeige-Nexus-Steuervorrichtung nach Anspruch 5 oder Anspruch 6, wobei die Anzeigeortauswahleinheit (40) dafür konfiguriert ist, für den jeweiligen zweiten Anzeigeteil (32L, 32R) von jedem der jeweiligen Vielzahl von tragbaren Endvorrichtungen (28, 62, 64, 66, 68) Informationen als verborgene Informationen für den jeweiligen zweiten Anzeigeteil (32L, 32R) zu bezeichnen, wobei die jeweiligen verborgenen Informationen auf dem jeweiligen zweiten Anzeigeteil (32L, 32R) nicht angezeigt werden.

8. Fahrzeuganzeige-Nexus-Steuervorrichtung nach einem der Ansprüche 5 bis 7, wobei in einem Fall, in dem die von der Anzeigeinformations-Erfassungseinheit (36) erfassten Informationen Informationen sind, die sich auf ein Hindernis in der Fahrzeugperipherie beziehen, die Informationen auf dem zweiten Anzeigeteil (32L, 32R) aller tragbaren Endvorrichtungen (28, 62, 64, 66, 68) angezeigt werden.

9. Fahrzeuganzeige-Nexus-Steuervorrichtung nach Anspruch 8, wobei auf dem zweiten Anzeigeteil (32L, 32R) die Informationen in einer Richtung angezeigt werden, in der das Hindernis vorhanden ist.

## Revendications

1. Appareil de commande de connexion d'affichage de véhicule (10, 60) pour un véhicule (12), comprenant :
une première partie d'affichage (24, 26) devant être prévue sur un corps principal de véhicule du véhicule (12) ;
un terminal portable (28, 62, 64, 66, 68) qui est configuré pour être porté au niveau d'une région de la tête d'un occupant (P) comprenant un conducteur du véhicule (12), et qui est pourvu d'une deuxième partie d'affichage (32L, 32R) à disposer devant un œil de l'occupant (P) dans un état porté ;
une unité d'acquisition d'informations d'affichage (36) qui est configurée pour acquérir des informations à afficher sur au moins l'une parmi la première partie d'affichage (24, 26) ou la deuxième partie d'affichage (32L, 32R) ; **caractérisé par**
une unité d'identification d'obstacle (44) configurée pour déterminer si oui ou non les informations acquises par l'unité d'acquisition d'informations d'affichage (36) sont des informations liées à un obstacle dans les environs du véhicule (12) ;
une unité de sélection d'emplacement d'affichage (40) qui est configurée pour déterminer s'il faut afficher des informations relatives à un obstacle telles qu'elles sont acquises par l'unité d'acquisition d'informations d'affichage (36) à la fois au niveau de la première partie d'affichage (24, 26) et de la deuxième partie d'affichage (32L, 32R), ou uniquement au niveau de la première partie d'affichage (24, 26), ou uniquement au niveau de la deuxième partie d'affichage (32L, 32R) sur la base du fait que le conducteur porte ou non le terminal portable (28, 62, 64, 66, 68).

2. Appareil de commande de connexion d'affichage de véhicule selon la revendication 1, dans lequel l'unité de sélection d'emplacement d'affichage (40) est configurée pour, en réponse à une détermination que le conducteur porte le terminal portable (22, 62, 64, 66, 68), afficher les informations relatives à un obstacle au niveau de la deuxième partie d'affichage (32L, 32R) du terminal portable (28, 62, 64, 66, 68) porté par le conducteur.

3. Appareil de commande de connexion d'affichage de véhicule selon la revendication 1 ou 2, dans lequel les informations acquises par l'unité d'acquisition d'informations d'affichage (36) comprennent des informations personnelles qui ne sont pas destinées à être divulguées à d'autres personnes, et l'unité de sélection d'emplacement d'affichage (40) est configurée, pour des informations personnelles, pour déterminer si oui ou non un occupant portant le terminal portable (28, 62, 64, 66, 68) a accès aux informations personnelles et, dans un cas dans lequel l'occupant portant le terminal portable (28, 62 , 64, 66, 68) a accès aux informations personnelles, pour afficher les informations personnelles uniquement sur la deuxième partie d'affichage (32L, 32R) du terminal portable (28, 62, 64, 66, 68) porté par l'occupant à un moment approprié.

4. Appareil de commande de connexion d'affichage de véhicule selon la revendication 3, dans lequel l'unité de sélection d'emplacement d'affichage (40) est configurée pour, pour des informations qui ne sont ni des informations liées à un obstacle ni des informations privées, afficher ces informations au niveau de la première partie d'affichage (24, 26).

5. Appareil de commande de connexion d'affichage de véhicule selon l'une quelconque des revendications 1 à 4, dans lequel une pluralité de terminaux portables (22, 62, 64, 66, 68) sont prévus pour être portés par différents occupants respectifs du véhicule (12).

6. Appareil de commande de connexion d'affichage de véhicule selon la revendication 5, comprenant en outre une unité de définition de priorité d'affichage (38) qui est configurée pour définir des niveaux de priorité respectifs, pour des informations à afficher, par rapport à la deuxième partie d'affichage (32L, 32R) de chacun de la pluralité respective de terminaux portables (28, 62, 64, 66, 68).

7. Appareil de commande de connexion d'affichage de véhicule selon la revendication 5 ou 6, dans lequel l'unité de sélection d'emplacement d'affichage (40) est configurée pour désigner, pour la deuxième partie d'affichage respective (32L, 32R) de chacun de la pluralité respective de terminaux portables (28, 62, 64, 66, 68), des informations en tant qu'informations cachées pour la deuxième partie d'affichage respective (32L, 32R), les informations cachées respectives n'étant pas affichées au niveau de la deuxième partie d'affichage respective (32L, 32R).

8. Appareil de commande de connexion d'affichage de véhicule selon l'une quelconque des revendications 5 à 7, dans lequel, dans un cas dans lequel les informations acquises par l'unité d'acquisition d'informations d'affichage (36) sont des informations relatives à un obstacle dans la périphérie du véhicule, les informations sont affichées au niveau de la deuxième partie d'affichage (32L, 32R) de tous les terminaux portables (28, 62, 64, 66, 68).

9. Appareil de commande de connexion d'affichage de véhicule selon la revendication 8, dans lequel, au niveau de la deuxième partie d'affichage (32L, 32R), des informations sont affichées dans une direction vers laquelle l'obstacle est présent.
